# EUROPEAN PATENT SPECIFICATION

(11) **EP 4 577 930 B1**
(45) Date of publication and mention of the grant of the patent: **22.04.2026**
(21) Application number: 23700109.4
(22) Date of filing: 09.01.2023
(51) Int. Cl.: G06F 21/56

(54) **METHODS AND APPARATUSES FOR PROTECTING FILE SYSTEM AND BACKUP DATA FROM STEGANOGRAPHY ATTACKS**
VERFAHREN UND VORRICHTUNGEN ZUM SCHUTZ EINES DATEISYSTEMS UND VON BACKUP-DATEN VOR STEGANOGRAPHIEANGRIFFEN
PROCÉDÉS ET APPAREILS DE PROTECTION DE SYSTÈME DE FICHIERS ET DE DONNÉES DE SAUVEGARDE CONTRE DES ATTAQUES STÉGANOGRAPHIQUES

(43) Date of publication of application: 02.07.2025
(73) Proprietor: Huawei Technologies Co., Ltd., Shenzhen, Guangdong 518129 (CN)
(72) Inventor: BIRMAN, Yoni, 80992 Munich (DE); NATANZON, Assaf, 80992 Munich (DE)
(74) Representative: Körber, Martin Hans
(86) International application number: PCT/EP2023/050253
(87) International publication number: WO 2024/149435

(56) References cited:
- US-A1- 2012 246 729
- US-A1- 2020 065 477
- US-A1- 2021 042 410

## Description

### TECHNICAL FIELD

The present disclosure relates generally to the field of data security and, more specifically, to a method of protecting a file system from steganography attacks, an apparatus for controlling network attached storage, NAS, a method and a backup apparatus for protecting a backup data from the steganography attacks.

### BACKGROUND

Typically, a ransomware is a type of intrusive software (i.e., malware), which is responsible for blocking an access to one or more files in a computer system by encrypting the files. In some cases, a malicious mail is sent to the computer system and when a user operating the computer system opens the malicious mail, a ransomware agent gets installed in the computer system. Ransomware attacks as well other types of cyber security attacks may involve steganography techniques for concealing a message within another message or a data object. In computer systems, a computer file, a message, an image, a video, or any other data object including malicious code is concealed within another file, message, image, video, or data object by using the steganography techniques. In other words, the steganography is used to hide malicious code, that can later be used to perform cyber security attacks such as ransomware attacks, within regular files or data objects. A small code can extract the malicious code later from the infected file or data object and perform the cyber security attack. Furthermore, in the case of a network attached storage, NAS, where multiple users retrieve data from a centralized storage, a malicious code concealed within another file or data object by means of the steganography can be entered into the NAS from multiple users. Hence, at least one of the multiple users connected to the NAS, which has vulnerability against the malicious code can lead to the entry of the malware such as ransomware in each computer system of the corresponding user connected to the NAS via the steganography based cyber security attack.

Currently, certain attempts have been made to protect the computer system from stenography based cyber security attacks, such as by using a secure snapshot technique and by using a write once read many, WORM, method. The secure snapshot technique may also be referred to as a point-in-time secure snapshot technique in which, the files cannot be modified or deleted during a defined protection window. Similarly, the WORM method was used to protect the files from modification or deletion for a pre-defined window. However, such attempts, fail to mitigate the risk of steganography based cyber security attacks completely, which is not desirable. Therefore, the conventional methods are ineffective to protect the files stored in the NAS due to vulnerability against the steganography based cyber security attacks over even one of the multiple users accessing the files from the NAS. Thus, there exists a technical problem of how to reduce the risk of cyber-attacks involving steganography with reduced data leakage to provide an improved and efficient recovery of data from the steganography attacks.

Therefore, in light of the foregoing discussion, there exists a need to overcome the aforementioned drawbacks associated with a method of protecting a file system from steganography attacks.

US 2021/0042410 A1 discloses information handling system for malicious code purification of graphics files.

US 2020/0065477 A1 discloses a computing system and method that provides file Content Disarm and Reconstruction (CDR) transformation implemented as a service including a gateway, controller, and separate disarm and reconstruct environments.

US 2012/0246729 A1 discloses data storage apparatus and methods for anti-virus detection and cure for data stored in such devices.

### SUMMARY

The present disclosure provides a method of protecting a file system from steganography attacks and an apparatus for controlling a network attached storage, NAS. Furthermore, the present disclosure provides a method and a backup apparatus for protecting a backup data from the steganography attacks. The present disclosure provides a solution to the existing problem of how to prevent the risk of cyber-attacks involving steganography with reduced data leakage and provide an improved and efficient recovery of the data from the steganography attacks. An aim of the present disclosure is to provide a solution that overcomes at least partially the problems encountered in the prior art and provides an improved method of protecting a file system from steganography attacks, an improved apparatus for controlling the NAS, an improved method and an improved backup apparatus for protecting a backup data from the steganography attacks.

One or more objectives of the present disclosure are achieved by the solutions provided in the enclosed independent claims. Advantageous implementations of the present disclosure are further defined in the dependent claims. In the following, parts of the description and drawings referring to embodiments which are not covered by the claims are not presented as embodiments of the invention, but as examples useful for understanding the invention.

In one aspect, the present disclosure provides a method of protecting a file system from steganography attacks. The method further comprises mounting a file system in a Network Attached Storage, NAS, allowing a writer to write a file into the mounted file system and obtaining a clean version of the file using a content disarm and reconstruct, CDR, filter once the file is closed by the writer and if a protection condition is met. The method further comprises storing the clean version of the file in the file system.

The method reduces the risk of the steganography attacks on the NAS and prevents data leakage by applying the CDR filter automatically once the file is closed by the writer The method provides leveraging CDR technologies for cyber-attack protection in the NAS. The method further allows an improved and secure recovery of the file from steganography attacks and other malware attacks. In addition, the clean version of the file is obtained, which prevents any malicious data to enter the file and significantly reduces the risk of steganography attacks. In addition, the method prevents malware attacks on other users connected to the NAS due to the vulnerability of at least one of the users, thereby creating a secure file system.

In a further implementation form, the protection condition is defined to be met in one of the following cases: a file is written by any writer, a file of a certain format is written by any writer, and a file is written by a writer that is not a part of a trusted user group.

In this implementation, the method provides efficient protection of the file system by anticipating the steganography attacks, even if one of the protection conditions is met.

In a further implementation form, the method comprises estimating whether the file is malicious by applying a preliminary filter to the file and defining the protection condition as met if the file is estimated as malicious.

The preliminary filter provides an additional protection to detect malicious files even before applying the CDR filter and is used to determine the protection conditions under which, the CDR filter can obtain the clean version.

In another aspect, the present disclosure provides a method of protecting a backup data from steganography attacks. The method comprises replicating files and/or data objects from a primary storage to a backup storage, obtaining a clean version of each of the replicated files and/or data objects using a content disarm and reconstruct, CDR, filter, and storing the clean version of each of the replicated files and/or data objects in the backup storage.

The method is used to provide a secure replication of the files and/or data objects when the primary storage is affected by the steganography attacks. Moreover, the CDR filter ensures that the replicated files and/or the replicated data objects are free from the steganography attacks.

In yet another aspect, the present disclosure provides an apparatus for controlling a Network Attached Storage, NAS. The apparatus is configured to mount a file system in the NAS, allowing a writer to write a file into the mounted file system, obtaining a clean version of the file using a Content Disarm and Reconstruct, CDR, filter once the file is closed by the writer and if a protection condition is met. Furthermore, the apparatus is configured to store the clean version of the file in the file system.

The apparatus achieves all the advantages and technical effects of the method of protecting a file system from steganography attacks of the present disclosure.

In another aspect, the present disclosure provides a backup apparatus, which is configured for replicating files and/or data objects from a primary storage to a backup storage, obtaining a clean version of each of the replicated files and/or data objects using a Content Disarm and Reconstruct, CDR, filter and storing the clean version of each of the replicated files and/or data objects in the backup storage.

The backup apparatus achieves all the advantages and technical effects of the method of protecting a backup data of the present disclosure.

It is to be appreciated that all the aforementioned implementation forms can be combined. It is noted that all devices, elements, circuitry, units, and means described in the present application could be implemented in the software or hardware elements or any kind of combination thereof. All steps which are performed by the various entities described in the present application, as well as the functionalities described to be performed by the various entities, are intended to mean that the respective entity is adapted to or configured to perform the respective steps and functionalities. Even if, in the following description of specific embodiments, a specific functionality or step to be performed by external entities is not reflected in the description of a specific detailed element of that entity that performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features, and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1: is a flow chart of a method of protecting a file system from steganography attacks, in accordance with an embodiment of the present disclosure;
- FIG. 2: is a block diagram that depicts an apparatus for controlling a network attached storage, NAS, in accordance with an embodiment of the present disclosure;
- FIG. 3: is a flowchart of a method of protecting a backup data from steganography attacks, in accordance with an embodiment of the present disclosure; and
- FIG. 4: is a block diagram that depicts a backup apparatus, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

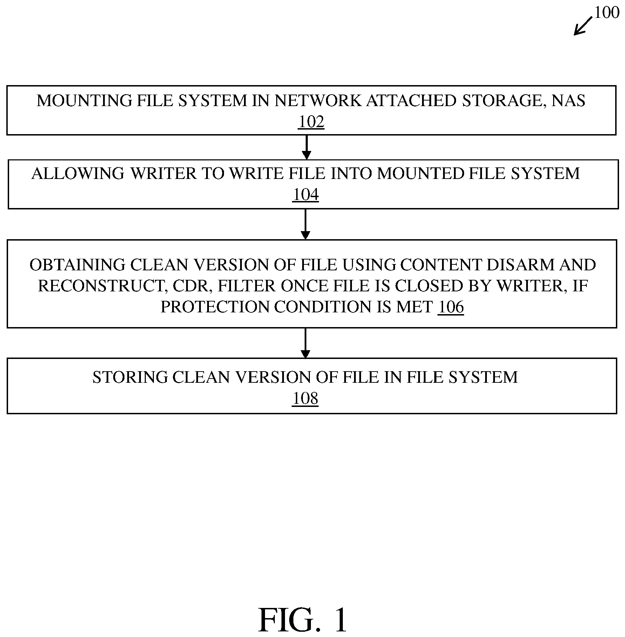

FIG. 1 is a flow chart of a method of protecting a file system from steganography attacks, in accordance with an embodiment of the present disclosure. With reference to FIG. 1, there is shown a flow chart of a method **100** that includes steps **102** to **108.**

The method **100** is used for protecting a file system from steganography attacks. The steganography attack corresponds to a ransomware attack, which includes the use of steganographic techniques to preserve secret data from detection and hide the secret data in an image or any document, which is incapable of getting detected. Moreover, the method **100** is used for preventing cyber-attack in electronic storage systems.

At step **102,** the method **100** includes mounting a file system in a network attached storage, NAS. The NAS corresponds to a file-level data storage server, which is configured with a computer network in which each user of the computer network has access to the data stored in the NAS. The examples of the NAS may include, but are not limited to, an enterprise-level NAS, a midmarket NAS, a consumer-level NAS, and the like. Further, the examples of the file system may correspond to a disk file system, a flash file system, a tape file system, a network file system, and the like. The method **100** is used for mounting the file system in a secure mode to enable the file system less susceptible to external malware attacks.

At step **104,** the method **100** includes allowing a writer to write a file into the mounted file system. The example of the file may include but are not limited to, an editable document, a portable document file, an image file, a video file, an audio file, and the like. In an implementation, only a single exclusive writer is authorized to write the file in the mounted file system. In an example, if one or more writers are connected to the NAS to add a file to the file system, then an information about the file needs to be provided to the writer that is authorized to write the file into the file system, as other writers do not have access for writing the file. Furthermore, the writer corresponds to a computing device or a mobile device, which is associated with the NAS. In addition, only one writer is allowed to write the file, due to which the file system gets protected from other writers and also from the steganography attacks. In an implementation, the method **100** includes storing an original version of the file. The original version is the original format of the file, which is initially stored in the file system, such as the original version is not accessible to other writers without predefined measures. The predefined measures may include but are not limited to, the use of an authentication key for accessing the original version, and the like. Moreover, the writer can get access to the original file to make any changes as per requirement.

At step **106,** the method **100** includes obtaining a clean version of the file using a content disarm and reconstruct, CDR, filter. Moreover, the CDR filter gets applied once the file is closed by the writer, and if a protection condition is met. In an implementation, the CDR filter is a computer software, which is configured to prevent the files from malware attack. The CDR filter deconstructs the file into a plurality of components, removes malicious component(s) if any from the plurality of components, and reconstructs the file to obtain the clean version. The clean version of the file is free from any malware. The CDR filter is beneficial to remove any malicious code or malware from the file, which might be entered into the file due to the steganography attack. In an implementation, the method **100** further comprises, providing no access to the file for any readers and/or other writers while the file is not closed by the writer. In other words, at the time of writing the file in the file system, any other readers and/or writers do not have access to the file unless the file is closed by the writer. In an example, at the time of writing the file in the file system, the file becomes vulnerable to malware due to the absence of any protection system associated with the file. Moreover, by virtue of preventing access to the file at the time of writing secures the file, the method **100** prevents any malware from getting entered into the file from any other readers and/or writers connected with the NAS.

In an implementation, the protection condition of step **104** is defined to be met in one of the following cases: a file is written by any writer, a file of a certain format is written by any writer, and a file is written by a writer that is not a part of a trusted user group. Moreover, only specific file formats may have the CDR filter applied, such as a specific file format selected based on risk and the CDR support. In addition, the CDR filter may be applied based on risk cases, and the trusted user group may not have the CDR filters on their files. Here, the trusted user group refers to a group of writers in which every writer is configured with any kind of malware protection system to protect the corresponding writer from a steganography attack.

Furthermore, the CDR applied on each stored file may also significantly reduce the possibility of data leakage, such as if data is hidden in one of the files, then the data will be automatically erased by the CDR filter. In such implementation, the method **100** further comprises, estimating whether the file is malicious by applying a preliminary filter to the file, and defining the protection condition as met if the file is estimated as malicious. The preliminary filter is an additional filtering device that removes malicious content from the file stored in the file system before entering the CDR filer. Examples of the preliminary filter may include but are not limited to, a content filter, a web filter, a security filter, and the like. The preliminary filter determines whether the file received contains malware and is configured to determine that the file satisfies the protection condition. The preliminary filter is beneficial to selectively apply the CDR filter on only selected files, which contain malware, thereby reducing the time of operation of the CDR filter on every file stored in the file system. At step **108,** the method **100** includes storing the clean version of the file in the file system. Once the CDR filter is applied, any malware presents in the file due to the steganography attack gets removed and the clean version of the file becomes available in the file system for users. The clean version of the file is not editable by any other users apart from the writer who had written the file in the file system.

The method **100** reduces the risk of the steganography attacks on the NAS and prevents data leakage by applying the CDR filter automatically once the file is closed by the writer. The method **100** includes leveraging CDR technologies for cyber-attack protection in the NAS. The method **100** further allows an improved and secured recovery of the file from steganography attacks and other malware attacks. In addition, the clean version of the file is obtained, which prevents any malicious data to enter the file and significantly reduces the risk of the steganography attacks. In addition, the method **100** prevents malware attacks on other users connected to the NAS due to the vulnerability of at least one of the users, thereby creating a secure file system.

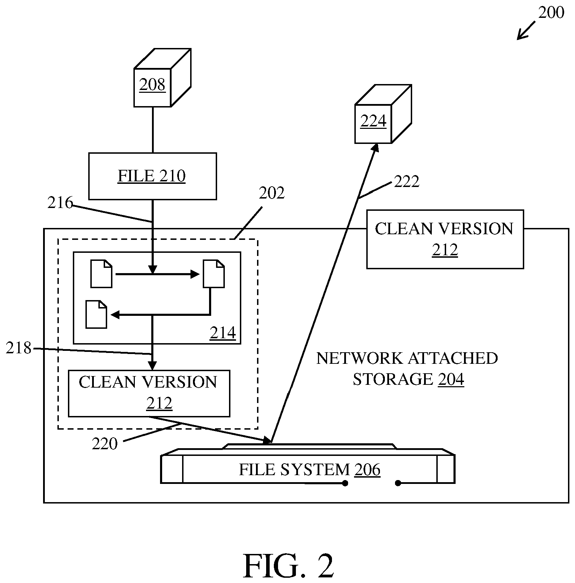

FIG. 2 is a block diagram that depicts an apparatus for controlling a Network Attached Storage, NAS, in accordance with an embodiment of the present disclosure. With reference to FIG. 2, there is shown a block diagram **200** that includes an apparatus **202** for controlling a network attached storage, NAS **204.**

In accordance with an embodiment, in an implementation, the apparatus **202** is a hardware controlling unit, which is configured to manage the file system in the NAS **204** and can be connected externally to any other NAS to secure the corresponding NAS. Examples of the apparatus **202** include but are not limited to an integrated circuit, a co-processor, a microprocessor, a complex instruction set computing, CISC, processor, an application-specific integrated circuit, ASIC, processor, a very long instruction word, VLIW, processor, a central processing unit (CPU), a state machine, a data processing unit, and other processors or circuits. Moreover, the apparatus **202** may refer to one or more individual processors, a processing unit that is part of a machine. In an example, the NAS **204** may correspond to a file-level data storage server, which is configured with a computer network in which, each member of the computer network has access to the data stored in the server. Further, the file system **206** may correspond to a software application, which organizes and maintains files on a storage device.

In operation, the apparatus **202** is configured to mount a file system **206** in the NAS **204.** Thereafter, at operation **216,** the apparatus **202** is configured to allow a writer **208** to write a file **210** into the mounted file system, such as the file system **206.** The examples of the file **210** may include, but are not limited to, an editable document, a portable document format (e.g., a x.pdf file), an image, a video, an audio file, and the like. In an implementation, the apparatus **202** is configured to store an original version of the file **210,** which was initially stored in the file system.

Furthermore, in an operation **218,** the apparatus **202** is configured to obtain a clean version **212** of the file **210** using a content disarm and reconstruct, CDR, filter **214** once the file is closed by the writer **208** and if a protection condition is met. In other words, the apparatus **202** is configured to check the protection condition before applying the CDR filter **214.** In an implementation, the apparatus **202** is configured to provide no access to the file **210** for any readers and/or other writers while the file **210** is not closed by the writer **208.** In other words, at the time of writing the file **210** in the file system **206,** the file **210** becomes vulnerable to malware due to the absence of any protection system associated with the file **210.** Hence, preventing access to the file **210** at the time of writing secures the file **210** and prevents any malware from getting entered into the file **210** from any one of the writers connected with the NAS **204.** The CDR filter **214** is beneficial to reduce the risk of the steganography attacks on the NAS **204** and also prevent data leakage.

In an implementation, the protection condition is defined to be met in one of the following cases: a file is written by any writer, a file of a certain format is written by any writer, and a file is written by a writer that is not a part of a trusted user group. Moreover, only specific file formats may have the CDR filter **214** applied, such as the file formats selected based on risk and the CDR support. In addition, the CDR filter **214** may be applied based on risk cases, and the trusted user group may not have the CDR filter **214** on corresponding files. Here, the trusted user group refers to a group of writers in which every writer is configured with any kind of malware protection system to protect the corresponding writer from a steganography attack. Furthermore, the CDR filter **214** applied on each stored file may also significantly reduce the possibility of data leakage, such as if data is hidden in one of the files, then the data will be automatically erased by the CDR filter **214.**

In such implementation, the apparatus **202** is configured to estimate whether the file **210** is malicious by applying a preliminary filter to the file **210** and defining the protection condition as met if the file is estimated as malicious. The preliminary filter is an additional filtering device that removes malicious content from the file stored in the file system before entering the CDR filer. The examples of the preliminary filter may include but are not limited to, content filter, web filter, security filter, and the like. The preliminary filter determines whether the file **210** received contains malware and is configured to determine that the file **210** satisfies the protection condition. The preliminary filter is used to selectively apply the CDR filter **214** on selected files, which contain malware, thereby reducing the time of operation of the CDR filter **214** on every file **210** stored in the file system **206.**

Further, in an operation **220,** the apparatus **202** is configured to store the clean version **212** of the file **210** in the file system **206.** The clean version **212** corresponds to a file, which is free from any malware or steganography. Moreover, only the writer **208** of the file **210** can edit the clean version **212** of the file **210** in the file system **206,** and no other users have editing privileges. In an example, the clean version **212** of the file **210** is in a portable document format, such as x.pdf. Thereafter, at operation **222,** the apparatus **202** provides the clean version **212** to a reader **224** in a portable document format (e.g., a x.pdf file), if the reader **224** requests the apparatus **202** to read the clean version **212** of the file **210.**

The apparatus **202** reduces the risk of the steganography attacks on the NAS **204** and prevent data leakage by applying the CDR filter **214** automatically once the file **210** is closed by the writer. The apparatus **202** leverages CDR technologies for cyber-attack protection in the NAS **204.** The apparatus **202** further allow an improved and secured recovery of the file **210** from the steganographic attacks and other malware attacks. In addition, the apparatus **202** prevents malware attacks on other users connected to the NAS **204** due to the vulnerability of at least one of the users, thereby creating a secure file system.

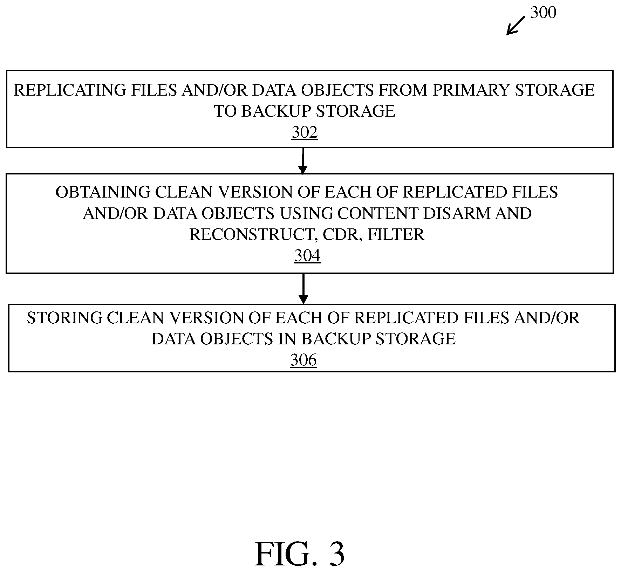

FIG. 3 is a flow chart of a method of protecting a backup data from steganography attacks, in accordance with an embodiment of the present disclosure. With reference to FIG. 3, there is shown a flowchart of a method **300** that includes steps **302** to **306.**

The method **300** is used for protecting a backup data from the steganography attacks. The advantage of protecting the backup data is that the replica of a primary data that is the data stored in the NAS **204** (of FIG. 2) can be securely recovered in case the files stored in the NAS **204** get infected by the malware, due to availability of secure backup data. Thus, the method **300** provides a secure replication and recovery of the files and allows faster recovery from the steganography attacks and other malware attacks.

At step **302,** the method **300** comprises replicating files and/or data objects from a primary storage to a backup storage. In an implementation, the method **300** includes replicating the files from the primary storage to the backup storage. In another implementation, the method **300** includes replicating the data objects form the primary storage to the backup storage. In yet another implementation, the method **300** includes replicating the files and the data objects from the primary storage to the backup storage. The primary storage is a hardware storage device or a server, and the like. In an example, the primary storage is configured by one or more users that are connected to the NAS. In an example, the NAS **204** (of FIG. 2) corresponds to the primary storage in which, the file **210** (as in FIG. 2) is replicated into the backup storage. Examples of the primary storage may include but are not limited to, a hard disk drive, a solid-state drive, SSD, a magnetic tape, a flash memory, a memory card, a cloud storage, and the like. Further, the backup storage is a storage device, which stores the copy of the data stored in the primary storage. Examples of the backup storage may include but are not limited to, a hard disk drive, an SSD, a magnetic tape, a flash memory, a memory card, a cloud storage, and the like. The examples of the files getting replicated may include but are not limited to, a portable document formats, images, audio files, video files, HTML files, editable documents, and the like. Further, the data object is a region of storage, which contains a group of values that represents a single characteristic or aspect. Each data object has a unique identifier for accessing the data object. The examples of the data object may include but are not limited to, arrays, pointers, records, files, sets, and scalar types. In accordance with an embodiment, the backup storage is an isolated high-security storage separated from the primary storage by an air gap means. In such embodiment, the air gap is an interface between the primary storage and the backup storage in which, a data is transferred within the interface without any internet or any wireless connection.

Furthermore, at step **304,** the method **300** comprises obtaining a clean version of each of the replicated files and/or data objects using a content disarm and reconstruct, CDR, filter. In an example, the CDR filter is a computer software or a processing unit, which is configured to disassemble and reconstruct the files and/or data objects to remove any malicious content (in the form of steganography) from the files and/or the data objects so that the files and/or the data objects are safely transferred to the backup storage. In an implementation, the method **300** includes obtaining the clean version of each of the replicated files using the CDR filter. In another implementation, the method **300** includes obtaining the clean version of each of the replicated data objects using the CDR filter. In yet another implementation, the method **300** includes obtaining the clean version of each of the replicated files and the replicated data objects using the CDR filter. The clean version of the replicated files and/or data objects is in a secure format, which is free from the steganography attacks. The application of the CDR filter during the replication of the files is beneficial in case the recovery of the files and/or data objects is not possible by any other means, the data will be recovered from the backup storage by ensuring that the files replicated in the backup storage do not have any such malware attacks hidden in the corresponding files. In an implementation, the CDR filter is used when the files and/or the data objects are transferred through the air gap means. In such embodiment, the files and/or the data objects are transferred to the air gap. Further, the CDR filter is applied to the files and/or the data objects and then, the filtered files and/or data objects get transferred to the backup storage. The air gap in combination with the CDR filter provides an additional protection for the replicating files and/or data objects to protect the files and/or data objects by blocking access to any external network through which the malware can enter the files and/or data objects. In an implementation, the CDR filter is used when the files and/or data objects are transferred through the air gap means. In another implementation, the CDR filter is used when the data objects are transferred through the air gap means. In yet another implementation, the CDR filter is used when the files and the data objects are transferred through the air gap means. As a result, the replicated files and/or the replicated data objects are protected from the steganography attacks.

Thereafter, at step **306,** the method **300** comprises storing the clean version of each of the replicated files and/or data objects in the backup storage. The clean version each of the replicated files and/or data objects is stored in the backup storage, which is accessible to multiple users. As the clean version of the replicated files and/or data objects is free from any malware, thus the users can safely share the files and/or data objects with each other.

Thus, the method **300** is used to provide a secure replication of the files and/or data objects when the primary storage is affected by the steganography attacks, such as the ransomware attack and other malware attacks. Moreover, the CDR filter used in the method **300** ensures that the replicated files and/or the replicated data objects are free from the steganography attacks.

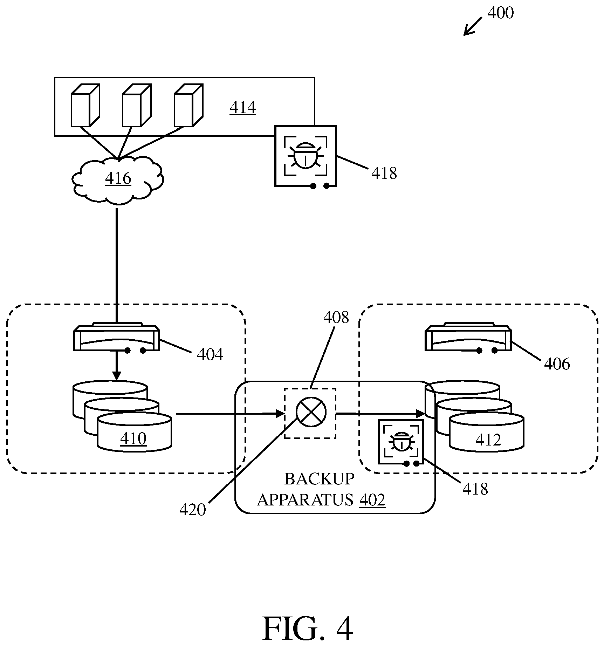

FIG. 4 is a block diagram that depicts a backup apparatus, in accordance with an embodiment of the present disclosure. With reference to FIG. 4, there is shown a block diagram **400** that depicts a backup apparatus **402,** a primary storage **404,** and a backup storage **406.**

In operation, the backup apparatus **402** is configured for replicating files and/or data objects **410** from the primary storage **404** to the backup storage **406.** In an example, the replicating files and/or data objects **410** replicated into the backup storage **406** are the files (as in FIG. 2) that are mounted in the file system **206** (as in FIG. 2). Further, in an implementation, the backup apparatus **402** is configured to replicate the files from the primary storage **404** to the backup storage **406.** In another implementation, the backup apparatus **402** is configured to replicate the data objects from the primary storage **404** to the backup storage **406.** In yet another implementation, the backup apparatus **402** is configured to replicate the files and the data objects from the primary storage **404** to the backup storage **406.** In accordance with an embodiment, the backup storage **406** is an isolated high-security storage separated from the primary storage **404** by an air gap means. In such embodiment, the air gap is an interface between the primary storage **404** and the backup storage **406** in which, data is transferred within the interface without any internet, or any wireless connection associated with the air gap.

Furthermore, the backup apparatus **402** is configured to obtain a clean version **412** of each of the replicated files and/or data objects **410** using a content disarm and reconstruct, CDR, filter **408.** In an implementation, the backup apparatus **402** is configured to obtain the clean version **412** of each of the replicated files using the CDR filter **408.** In another implementation, the backup apparatus 402 is configured to obtain the clean version **412** of each of the replicated data objects using the CDR filter **408.** In yet another implementation, backup apparatus 402 is configured to obtain the clean version **412** of each of the replicated files and the replicated data objects using the CDR filter **408.**

In an example, the CDR filter **408** is a computer software or a processing unit, which is configured to disassemble and reconstruct the files and/or data objects **410** to remove any malicious content (in the form of steganography) from the files and/or data objects **410** so that the files and/or data objects **410** are safely transferred to the backup storage **406.** Moreover, the CDR filter **408** is used when the files and/or data objects are transferred through the air gap means. In such embodiment, the files and/or data objects are transferred from the primary storage **404** to the air gap. In an example, the backup apparatus **402** is configured to control the air gap using an air gap controller **420.** Further, the CDR filter **408** is applied to the files and/or data objects **410** and then, the clean version **412** of files and/or data objects get transferred to the backup storage **406.**

Thereafter, the backup apparatus **402** is configured to store the clean version **412** of each of the replicated files and/or data objects in the backup storage **406.** The clean version **412** of the replicated files and/or data objects are stored in the backup storage **406,** which is accessible to multiple users. As the clean version **412** of the replicated files and/or data objects are free from any malware, thus the users can safely share the files and/or data objects **410** with each other.

In an implementation, the files and/or data objects in the primary storage **404** are retrieved from a server **414,** through a network **416.** The server **414** is a storage device or a cloud server, which includes a storage data of one or more computer systems. In a scenario, at least one of the computer systems includes a malware **418** that gets transferred to the server **414** and further to the primary storage **404** at the time of transferring the storage data from the server **414.** During replication of the files and/or data objects **410** from the primary storage **404,** the backup apparatus **402** transfers the files and/or data objects **410** through the air gap and applies the CDR filter **408** to remove the malware **418** from the files and/or data objects.

The backup apparatus **402** protects the backup data during replication using the CDR filter **408,** thereby avoiding the steganography attack on the replicated data such as files and/or data objects. In case the files and/or data objects **410** stored in the primary storage **404** get affected by the malware **418,** the backup apparatus **402** maintains a secure copy of each file and/or each data object, which can later be retrieved. In the case of the steganography attack, the primary storage **404** fails to recover by other means, the backup apparatus **402** is configured to recover the files and/or data objects **410** from the backup storage **406** by ensuring that the backup storage **406** does not have any such steganography attack hidden in the files and/or data objects **410.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the disclosure, which are, for brevity, described in the context of a single embodiment, may also be provided separately or in any suitable combination or as suitable in any other described embodiment of the disclosure.

## Claims

1. A method (100) of protecting a file system (206) from steganography attacks, comprising:
mounting a file system (206) in a Network Attached Storage, NAS (204),
allowing a writer (208) to write a file (210) into the mounted file system,
estimating whether the file (210) is malicious by applying a preliminary filter to the file, and
defining a protection condition as met if the file (210) is estimated as malicious;
obtaining a clean version (212) of the file (210) using a Content Disarm and Reconstruct, CDR, filter (214, 408) once the file (210) is closed by the writer (208), if the protection condition is met, and
storing the clean version (212) of the file (210) in the file system (206).

2. The method (100) of claim 1, further comprising:
providing no access to the file (210) for any readers and/or other writers while the file (210) is not closed by the writer (208).

3. The method (100) of claim 1 or 2, further comprising:
storing an original version of the file (210).

4. The method (100) of any of claims 1 to 3, wherein the protection condition is defined to be met in one of the following cases:
a file is written by any writer,
a file of a certain format is written by any writer, and
a file is written by a writer that is not a part of a trusted user group.

5. A method (300) of protecting a backup data from steganography attacks, comprising:
replicating files and/or data objects (410) from a primary storage (404) to a backup storage (406),
obtaining a clean version (412) of each of the replicated files and/or data objects (410) using a Content Disarm and Reconstruct, CDR, filter (214, 408), and
storing the clean version (412) of each of the replicated files and/or data objects (410) in the backup storage (406);
wherein the backup storage (406) is an isolated high security storage separated from the primary storage (404) by an air gap (420) means and the CDR filter (214, 408) is used when the files and/or data objects (410) are transferred through the air gap (420) means.

6. An apparatus (202) for controlling a Network Attached Storage, NAS (204), the apparatus being configured for:
mounting a file system (206) in the NAS (204),
allowing a writer (208) to write a file (210) into the mounted file system,
estimating whether the file (210) is malicious by applying a preliminary filter to the file, and
defining a protection condition as met if the file (210) is estimated as malicious;
obtaining a clean version (212) of the file (210) using a Content Disarm and Reconstruct, CDR, filter (214, 408) once the file (210) is closed by the writer (208), if the protection condition is met, and
storing the clean version (212) of the file (210) in the file system (206).

7. The apparatus (202) of claim 6, being configured for providing no access to the file (210) for any readers and/or other writers while the file (210) is not closed by the writer (208).

8. The apparatus (202) of claim 6 or 7, being configured for storing an original version of the file (210).

9. The apparatus (202) of any of claims 6 to 8, wherein the protection condition is defined to be met in one of the following cases:
a file is written by any writer,
a file of a certain format is written by any writer, and
a file is written by a writer that is not a part of a trusted user group.

10. A backup apparatus (402) being configured for:
replicating files and/or data objects (410) from a primary storage (404) to a backup storage (406),
obtaining a clean version (412) of each of the replicated files and/or data objects (410) using a Content Disarm and Reconstruct, CDR, filter (214, 408), and
storing the clean version (412) of each of the replicated files and/or data objects (410) in the backup storage (406);
wherein the backup storage (406) is an isolated high security storage separated from the primary storage (404) by an air gap (420) means, and the CDR filter (214, 408) is used when the files and/or data objects (410) are transferred through the air gap (420) means.

## Patentansprüche

1. Verfahren (100) zum Schützen eines Dateisystems (206) vor Steganographieangriffen, umfassend:
Montieren eines Dateisystems (206) in einem Network-Attached-Storage, NAS (204),
Erlauben eines Schreibers (208), eine Datei (210) in das montierte Dateisystem zu schreiben,
Einschätzen, ob die Datei (210) bösartig ist, indem ein Vorfilter auf die Datei angewendet wird, und
Definieren einer Schutzbedingung als erfüllt, wenn die Datei (210) als bösartig eingeschätzt wird;
Erlangen einer bereinigten Version (212) der Datei (210) unter Verwendung eines Content-Disarm-and-Reconstruct-Filters, CDR-Filters, (214, 408), sobald die Datei (210) durch den Schreiber (208) geschlossen wird, wenn die Schutzbedingung erfüllt ist, und
Speichern der bereinigten Version (212) der Datei (210) in dem Dateisystem (206).

2. Verfahren (100) gemäß Anspruch 1, ferner umfassend:
nicht Bereitstellen des Zugriffs auf die Datei (210) für alle Leser und/oder andere Schreiber, solange die Datei (210) nicht durch den Schreiber (208) geschlossen ist.

3. Verfahren (100) gemäß Anspruch 1 oder 2, ferner umfassend: Speichern einer Originalversion der Datei (210).

4. Verfahren (100) gemäß einem der Ansprüche 1 bis 3, wobei die Schutzbedingung definiert ist, um in einem der folgenden Fälle erfüllt zu sein:
eine Datei wird durch einen beliebigen Schreiber geschrieben,
eine Datei mit einem bestimmten Format wird durch einen beliebigen Schreiber geschrieben und
eine Datei wird durch einen Schreiber geschrieben, der nicht zu einer vertrauenswürdigen Benutzergruppe gehört.

5. Verfahren (300) zum Schützen von Backup-Daten vor Steganographieangriffen, umfassend:
Replizieren von Dateien und/oder Datenobjekten (410) von einem Primärspeicher (404) zu einem Backup-Speicher (406),
Erlangen einer bereinigten Version (412) jeder/jedes der replizierten Dateien und/oder Datenobjekte (410) unter Verwendung eines Content-Disarm-and-Reconstruct-Filters, CDR-Filters, (214, 408), und
Speichern der bereinigten Version (412) jeder/jedes der replizierten Dateien und/oder Datenobjekte (410) in dem Backup-Speicher (406);
wobei der Backup-Speicher (406) ein isolierter Hochsicherheitsspeicher ist, der von dem Primärspeicher (404) durch ein Luftspaltmittel (420) getrennt ist, und der CDR-Filter (214, 408) verwendet wird, wenn die Dateien und/oder Datenobjekte (410) durch das Luftspaltmittel (420) übertragen werden.

6. Vorrichtung (202) zum Steuern eines Network-Attached-Storage, NAS (204), wobei die Vorrichtung konfiguriert ist zum:
Montieren eines Dateisystems (206) in dem NAS (204),
Erlauben eines Schreibers (208), eine Datei (210) in das montierte Dateisystem zu schreiben,
Einschätzen, ob die Datei (210) bösartig ist, indem ein Vorfilter auf die Datei angewendet wird, und
Definieren einer Schutzbedingung als erfüllt, wenn die Datei (210) als bösartig eingeschätzt wird;
Erlangen einer bereinigten Version (212) der Datei (210) unter Verwendung eines Content-Disarm-and-Reconstruct-Filters, CDR-Filters, (214, 408), sobald die Datei (210) durch den Schreiber (208) geschlossen wird, wenn die Schutzbedingung erfüllt ist, und
Speichern der bereinigten Version (212) der Datei (210) in dem Dateisystem (206).

7. Vorrichtung (202) gemäß Anspruch 6, die dazu konfiguriert ist, keinen Zugriff auf die Datei (210) für alle Leser und/oder andere Schreiber bereitzustellen, solange die Datei (210) nicht durch den Schreiber (208) geschlossen ist.

8. Vorrichtung (202) gemäß Anspruch 6 oder 7, die dazu konfiguriert ist, eine Originalversion der Datei (210) zu speichern.

9. Vorrichtung (202) gemäß einem der Ansprüche 6 bis 8, wobei die Schutzbedingung definiert ist, um in einem der folgenden Fälle erfüllt zu sein:
eine Datei wird durch einen beliebigen Schreiber geschrieben,
eine Datei mit einem bestimmten Format wird durch einen beliebigen Schreiber geschrieben und
eine Datei wird durch einen Schreiber geschrieben, der nicht zu einer vertrauenswürdigen Benutzergruppe gehört.

10. Backup-Vorrichtung (402), die konfiguriert ist zum:
Replizieren von Dateien und/oder Datenobjekten (410) von einem Primärspeicher (404) zu einem Backup-Speicher (406),
Erlangen einer bereinigten Version (412) jeder/jedes der replizierten Dateien und/oder Datenobjekte (410) unter Verwendung eines Content-Disarm-and-Reconstruct-Filters, CDR-Filters, (214, 408), und
Speichern der bereinigten Version (412) jeder/jedes der replizierten Dateien und/oder Datenobjekte (410) in dem Backup-Speicher (406);
wobei der Backup-Speicher (406) ein isolierter Hochsicherheitsspeicher ist, der von dem Primärspeicher (404) durch ein Luftspaltmittel (420) getrennt ist, und der CDR-Filter (214, 408) verwendet wird, wenn die Dateien und/oder Datenobjekte (410) durch das Luftspaltmittel (420) übertragen werden.

## Revendications

1. Procédé (100) de protection d'un système de fichiers (206) contre des attaques stéganographiques, comprenant :
le montage d'un système de fichiers (206) dans un système de stockage en réseau, NAS (204),
l'autorisation donnée à un processus d'écriture (208) d'écrire un fichier (210) dans le système de fichiers monté,
l'évaluation du caractère malveillant du fichier (210) en appliquant un filtre préliminaire au fichier, et
la définition d'une condition de protection comme étant remplie lorsque le fichier (210) est estimé comme malveillant ;
l'obtention d'une version nettoyée (212) du fichier (210) à l'aide d'un filtre de désarmement et de reconstruction de contenu, CDR (214, 408), une fois le fichier (210) fermé par le processus d'écriture (208), si la condition de protection est remplie, et
le stockage de la version nettoyée (212) du fichier (210) dans le système de fichiers (206).

2. Procédé (100) selon la revendication 1, comprenant également :
la mise à disposition d'aucun accès au fichier (210) pour un processus de lecture quelconque et/ou autre processus d'écriture tant que le fichier (210) n'est pas fermé par le processus d'écriture (208).

3. Procédé (100) selon la revendication 1 ou 2, comprenant également :
le stockage d'une version originale du fichier (210).

4. Procédé (100) selon l'une quelconque des revendications 1 à 3, dans lequel la condition de protection est définie comme étant remplie dans l'un des cas suivants :
un fichier est écrit par un processus d'écriture quelconque,
un fichier d'un certain format est écrit par un processus d'écriture quelconque, et
un fichier est écrit par un processus d'écriture quelconque qui ne fait pas partie d'un groupe d'utilisateurs de confiance.

5. Procédé (300) de protection de données de sauvegarde contre des attaques stéganographiques, comprenant :
la réplication de fichiers et/ou d'objets de données (410) depuis un stockage principal (404) vers un stockage de sauvegarde (406),
l'obtention d'une version nettoyée (412) de chacun des fichiers et/ou objets de données (410) répliqués à l'aide d'un filtre de désarmement et de reconstruction de contenu, CDR (214, 408), et le stockage de la version nettoyée (412) de chacun des fichiers et/ou objets de données répliqués (410) dans le stockage de sauvegarde (406) ;
dans lequel le stockage de sauvegarde (406) est un stockage isolé de haute sécurité séparé du stockage principal (404) par un dispositif d'isolement physique (420) et le filtre CDR (214, 408) est utilisé lorsque les fichiers et/ou les objets de données (410) sont transférés à travers le dispositif d'isolement physique (420).

6. Appareil (202) destiné à commander un système de stockage en réseau, NAS (204), l'appareil étant configuré pour :
monter un système de fichiers (206) dans le NAS (204),
autoriser un processus d'écriture (208) à écrire un fichier (210) dans le système de fichiers monté,
évaluer le caractère malveillant du fichier (210) en appliquant un filtre préliminaire au fichier, et
définir une condition de protection comme étant remplie lorsque le fichier (210) est estimé comme malveillant ;
obtenir une version nettoyée (212) du fichier (210) à l'aide d'un filtre de désarmement et de reconstruction de contenu, CDR (214, 408), une fois le fichier (210) fermé par le processus d'écriture (208), si la condition de protection est remplie, et stocker la version nettoyée (212) du fichier (210) dans le système de fichiers (206).

7. Appareil (202) selon la revendication 6, étant configuré pour ne mettre à disposition aucun accès au fichier (210) pour tout processus de lecture et/ou autre processus d'écriture tant que le fichier (210) n'est pas fermé par le processus d'écriture (208).

8. Appareil (202) selon la revendication 6 ou 7, étant configuré pour stocker une version originale du fichier (210).

9. Appareil (202) selon l'une quelconque des revendications 6 à 8, dans lequel la condition de protection est définie comme étant remplie dans l'un des cas suivants :
un fichier est écrit par un processus d'écriture quelconque,
un fichier d'un certain format est écrit par un processus d'écriture quelconque, et
un fichier est écrit par un processus d'écriture quelconque qui ne fait pas partie d'un groupe d'utilisateurs de confiance.

10. Appareil de sauvegarde (402) est configuré pour :
répliquer des fichiers et/ou des objets de données (410) depuis un stockage principal (404) vers un stockage de sauvegarde (406),
obtenir une version nettoyée (412) de chacun des fichiers et/ou objets de données (410) répliqués à l'aide d'un filtre de désarmement et de reconstruction de contenu, CDR (214, 408), et stocker la version nettoyée (412) de chacun des fichiers et/ou objets de données répliqués (410) dans le stockage de sauvegarde (406) ;
dans lequel le stockage de sauvegarde (406) est un stockage isolé de haute sécurité séparé du stockage principal (404) par un dispositif d'isolement physique (420) et le filtre CDR (214, 408) est utilisé lorsque les fichiers et/ou les objets de données (410) sont transférés à travers le dispositif d'isolement physique (420).
